(19) Europäisches Patentamt

European Patent Office

Office européen des brevets

(11) **EP 1 028 086 B1**

(12) **EUROPÄISCHE PATENTSCHRIFT**

(45) Veröffentlichungstag und Bekanntmachung des Hinweises auf die Patenterteilung:
**13.09.2006 Patentblatt 2006/37**

(51) Int Cl.:
*B66F 9/075* *(2006.01)*    *B62D 7/08* *(2006.01)*

(21) Anmeldenummer: **00102710.1**

(22) Anmeldetag: **09.02.2000**

(54) **Flurförderzeug mit zwei lenkbaren Antriebsrädern**

Industrial truck with two steerable driving wheels

Chariot de manutention avec deux roues d' entraînement directrices

(84) Benannte Vertragsstaaten:
**DE FR GB IT SE**

(30) Priorität: **09.02.1999 DE 19905325**

(43) Veröffentlichungstag der Anmeldung:
**16.08.2000 Patentblatt 2000/33**

(73) Patentinhaber: **STILL S.A.R.L.**
**77100 Meaux (FR)**

(72) Erfinder:
• **Abonnet, Jaques**
**58200 Cosne/Loire (FR)**
• **Petitfrere, Claire**
**60500 Chantilly (FR)**
• **Gilet, Olivier**
**59880 Saint Saulve (FR)**

(74) Vertreter: **Kasseckert, Rainer**
**Linde Aktiengesellschaft,**
**Zentrale Patentabteilung**
**Dr.-Carl-von-Linde-Strasse 6-14**
**82049 Höllriegelskreuth (DE)**

(56) Entgegenhaltungen:
**DE-B- 1 139 042      FR-A- 1 399 273**
**FR-A- 1 586 394      FR-A- 2 267 976**
**US-A- 3 933 218**

## Beschreibung

Die Erfindung betrifft ein Flurförderzeug, beispielsweise Hubwagen oder Kommissionierer, mit zwei lenkbaren Antriebsrädern, mindestens zwei von den Antriebsrädern in Fahrtrichtung beabstandeten, nicht schwenkbaren Lastrollen und einem von einer Bedienperson betätigbaren Lenkgeber, wobei jedem Antriebsrad ein Antriebsmotor zugeordnet ist, die lenkbaren Antriebsräder in einer zur Fahrzeuglängsachse annähemd orthogonalen Richtung zueinander beabstandet, insbesondere auf verschiedenen Seiten der Fahrzeuglängsachse angeordnet sind.

Als Lenkgeber finden beispielsweise Lenkräder oder Lenkdeichseln Verwendung, die gegebenenfalls über ein Getriebe direkt oder indirekt mit den Antriebsrädern verbunden sind. Bekannt sind ebenfalls Lenkungsvorrichtungen, bei denen der Lenkgeber einen elektrischen Signalgeber aufweist, der über ein elektronisches Steuergerät mit einem elektrischen Lenkmotor des Antriebsrads verbunden ist.

Flurförderzeuge der genannten Art sind häufig als Vierradfahrzeuge ausgeführt. Hierbei sind in der Regel zwei Lastrollen oder Lastrollenpaare (Tandem-Lastrollen) vorgesehen, mit denen das Flurförderzeug lastseitig auf einer Fahrbahn aufsteht. Antriebsseitig ist mindestens ein Antriebsrad vorgesehen. Ein zweites antriebsseitiges Rad ist bei gattungsgemäßen Flurförderzeugen ebenfalls als ein mit einem Antriebsmotor ausgerüstetes Antriebsrad ausgeführt. Bekannt sind ebenfalls Flurförderzeuge, bei denen das zweite antriebsseitige Rad als Lenkrolle ausgeführt ist. Bei derartigen Fahrzeugen mit einem einzigen Antriebsrad werden sämtliche Antriebs-und Lenkkräfte über das einzige Antriebsrad auf die Fahrbahn übertragen. Die bei diesen Fahrzeugen vorgesehene Lenkrolle ist um ihre horizontale Drehachse frei drehbar und frei schwenkbar um eine vertikale Schwenkachse.

Bei gattungsgemäßen Flurförderzeugen mit zwei lenkbaren Antriebsrädern erfolgt der Fahrantrieb und die Lenkung gleichermaßen über beide Antriebsräder, wobei beide Antriebsräder gelenkt werden, sowie in der FR-A-1 399 273. Bei bekannten Flurförderzeugen dieser Art werden die beiden Antriebsräder in Abhängigkeit von der Stellung der Deichsel jeweils um den gleichen Winkelbetrag eingeschlagen. Bei Verschleißuntersuchungen der Antriebsräder wurde festgestellt, daß die Antriebsräder von derart ausgeführten Flurförderzeugen einer deutlichen Abnützung unterworfen sind und darüber hinaus das Flurförderzeug während einer Kurvenfahrt eine ungenügende Fahrstabilität aufweist. Der vorliegenden Erfindung liegt daher die Aufgabe zugrunde, ein verschleißarmes Flurförderzeug der eingangs genannten Art zur Verfügung zu stellen, das sich durch ein verbessertes Fahrverhalten auszeichnet.

Diese Aufgabe wird erfindungsgemäß dadurch gelöst, daß die lenkbaren Antriebsräder derart mit dem Lenkgeber in Wirkverbindung stehen, daß in Abhängigkeit von einer Betätigung des Lenkgebers das kurveninnere Antriebsrad einen stärkeren Lenkeinschlag aufweist, als das kurvenäußere Antriebsrad, wobei die Fahrmotoren derart mit dem Lenkgeber in Wirkverbindung stehen, daß in Abhängigkeit von einer Betätigung des Lenkgebers das kurveninnere Antriebsrad mit einer geringeren Geschwindigkeit angetrieben wird, als das kurvenäußere Antriebsrad. Die Lenkeinschläge der Antriebsräder werden so eingestellt, daß sich die Mittelachsen der beiden Antriebsräder in einem gemeinsamen Kurvenmittelpunkt schneiden. Es ist somit sichergestellt, daß während einer Kurvenfahrt keines der Antriebsräder in seitlicher Richtung über die Fahrbahn gleitet. Die Geschwindigkeiten der Antriebsräder werden so eingestellt, daß eine Gleitbewegung eines Antriebsrads auf der Fahrbahn in dessen Umfangsrichtung vermieden wird.

In einer möglichen Ausführungsform steht der Lenkgeber mit den Antriebsrädern mittels eines Zugmittelgetriebes in Wirkverbindung. Als Zugmittel können beispielsweise Ketten oder Zahnriemen verwendet werden, mit denen eine Drehung des Lenkgebers in eine Lenkbewegung der Antriebsräder umgesetzt wird. Das Zugmittelgetriebe kann dabei eine mechanische Verbindung zu dem Lenkgeber aufweisen.

Wenn das Zugmittelgetriebe mindestens eine das Zugmittel umlenkende Kurvenscheibe aufweist, kann über die Formgebung der Kurvenscheibe ein bestimmter Verlauf des Lenkwinkels eines Antriebsrads in Abhängigkeit von der Stellung des Lenkgebers eingestellt werden. Über die Formgebung der Kurvenscheibe kann somit ebenfalls eingestellt werden, daß das kurveninnere Antriebsrad einen stärkeren Lenkeinschlag erfährt, als das kurvenäußere Antriebsrad.

In einer möglichen Ausführungsform ist mindestens ein elektrischer Lenkmotor vorgesehen und steht der Lenkmotor mit dem Lenkgeber über eine elektronische Steuerung in Wirkverbindung, wobei die Steuerung den Lenkmotor in Abhängigkeit von der Stellung des Lenkgebers ansteuert. Die zum Lenken der Antriebsräder erforderliche Kraft wird von dem Lenkmotor erzeugt. Eine Ausgangswelle des Lenkmotors kann beispielsweise über das Zugmittelgetriebe mit den Antriebsrädern verbunden sein.

Besondere Vorteile ergeben sich, wenn jedes Antriebsrad einen elektrischen Lenkmotor aufweist. Der erfindungsgemäß unterschiedliche Lenkeinschlag der Antriebsräder kann bei dieser Ausführungsform durch entsprechende Programmierung der Steuerung eingestellt werden.

Weitere Vorteile und Einzelheiten der Erfindung werden anhand des in den schematischen Figuren dargestellten Ausführungsbeispiels näher erläutert. Dabei zeigt

Figur 1    den Antriebsteil eines gattungsgemäßen Flurförderzeugs,
Figur 2    die Anordnung der Antriebsräder,

Figur 3 die Anordnung eines Zugmittelgetriebes,
Figur 4 die Winkelstellung der Räder bei betätigter Lenkung,
Figur 5 die Winkelstellung der Räder bei maximalem Lenkwinkel.

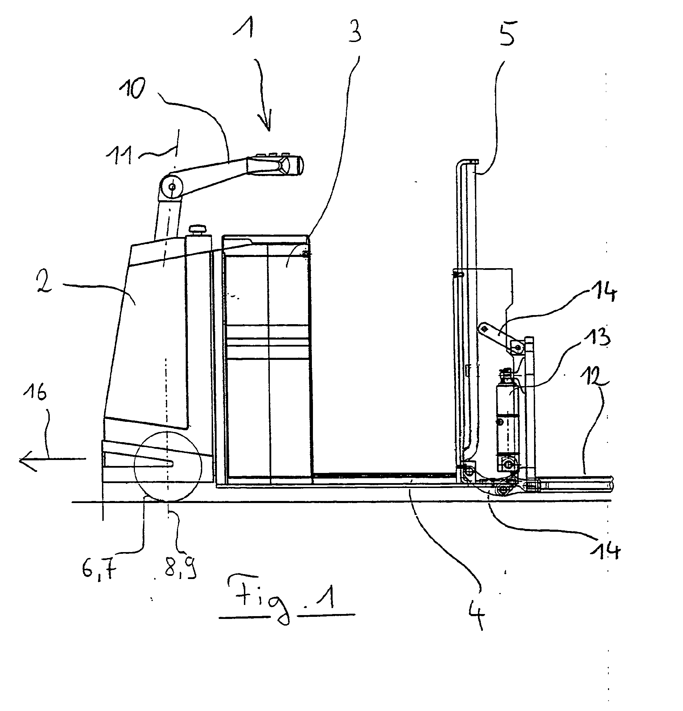

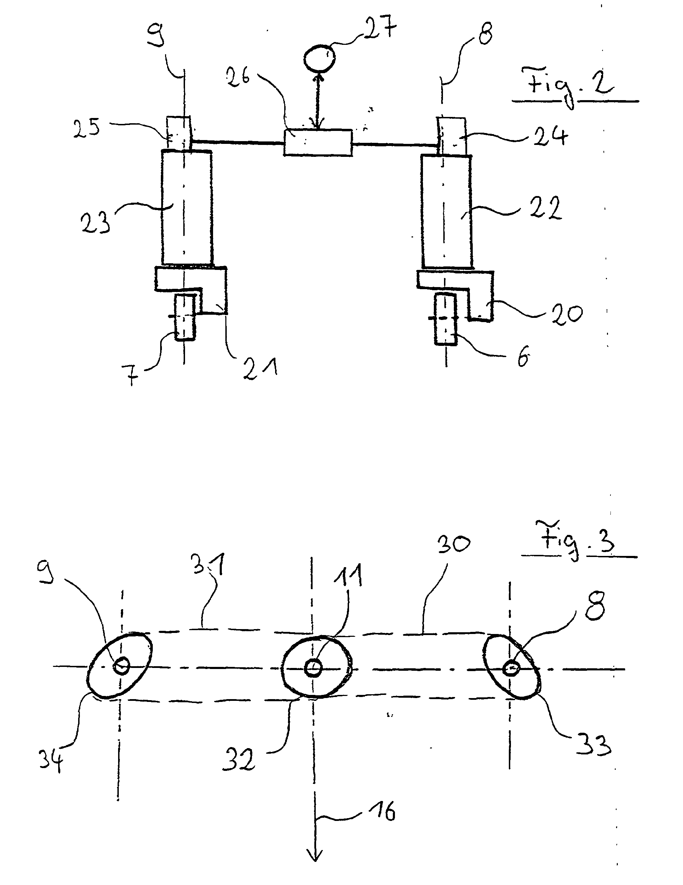

Figur 1 zeigt den Antriebsteil 1 eines als Niederhubkommissionierer ausgeführten gattungsgemäßen Flurförderzeugs. Die Erfindung ist jedoch gleichermaßen bei Flurförderzeugen anderen Typs, beispielsweise bei Nieder- oder Hochhubwagen einsetzbar.
Der Antriebsteil 1 des Niederhubkommissionierers umfaßt ein Antriebsgehäuse 2, einen Batterieblock 3, eine Fahrerstandplattform 4 sowie eine Brüstung 5. Im Bereich des Antriebsgehäuses 2 befinden sich zwei Antriebsräder 6, 7, die sich in der vorliegenden Ansicht jedoch gegenseitig verdecken. Jedem dieser Antriebsräder 6, 7 ist ein elektrischer Antriebsmotor zugeordnet, welche in dieser Figur jedoch nicht dargestellt sind.
Die Antriebsräder 6, 7 stehen mit einer Lenkdeichsel 10 in Wirkverbindung und werden in Abhängigkeit von einer Drehung der Lenkdeichsel 10 um die Achse 11 um die vertikalen Lenkachsen 8 bzw. 9 gelenkt. Die Übertragung der Drehung der Lenkdeichsel 10 auf die Antriebsräder 6, 7 erfolgt mechanisch, z.B. über ein Zugmittelgetriebe, und/ oder elektrisch über eine geeignete Steuerung, die eine oder zwei elektrische Lenkmotoren ansteuert.
Die Lenkdeichsel 10 ist derart angeordnet, daß sie von einer auf der Fahrerstandplattform 4 stehenden Bedienperson gut erreicht und betätigt werden kann. Die Fahrerstandplattform 4 ist lastseitig begrenzt durch eine Brüstung 5, an die sich eine anhebbare Lastgabel 12 anschließt. Ein Hubmechanismus 13 für die Lastgabel ist schematisch dargestellt und umfaßt einen Hydraulikzylinder 13 und mehrere Parallelogrammhebel 14. Im Bereich des nicht dargestellten Endes der Lastgabel 12 befinden sich zwei Lastrollen, mit denen der Lastteil des Flurförderzeugs auf der Fahrbahn aufsteht. Die Hauptfahrrichtung des Flurförderzeugs in Richtung des Antriebsteils ist durch einen Pfeil 16 verdeutlicht.

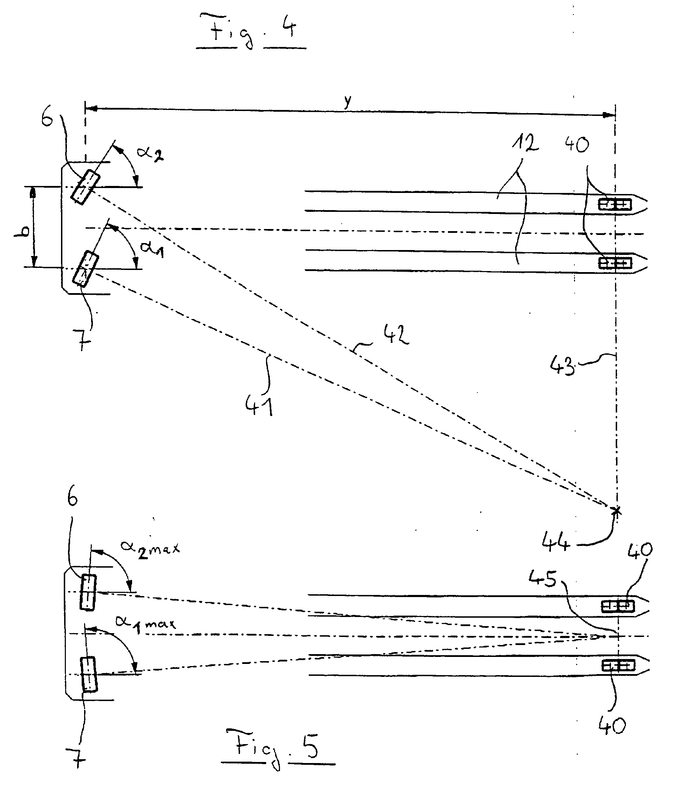

In Figur 2 ist die Anordnung der Antriebsräder 6, 7 dargestellt. Die Antriebsräder 6, 7 sind jeweils über ein Getriebe 20, 21 mit elektrischen Antriebsmotoren 22, 23 verbunden. Die Antriebsräder 6, 7 können gemeinsam mit ihren Antriebsmotoren 22, 23 um die vertikalen Achsen 8, 9 geschwenkt werden, wobei in diesem Ausführungsbeispiel die Lenkbewegung durch jeweils einen elektrischen Lenkmotor 24, 25 erzeugt wird. Die Lenkmotoren 24, 25 werden von einer gemeinsamen elektrischen Steuerung 26 angesteuert, wobei erfindungsgemäß stets das kurveninnere Antriebsrad 6, 7 einen stärkeren Lenkeinschlag erfährt, als das kurvenäußere Antriebsrad 7, 6. Die Steuerung 26 steht mit einem schematisch dargestellten Lenkgeber 27 in Verbindung, welcher eine Drehung der Lenkdeichsel 10 um die Achse 11 (siehe Fig. 1) erfaßt und ein entsprechendes Steuersignal erzeugt.
Figur 3 zeigt die Anordnung einer Lenkvorrichtung, bei der der erfindungsgemäß unterschiedliche Lenkeinschlag der beiden Antriebsräder 6, 7 durch die nachfolgend beschriebene Ausbildung eines Zugmittelgetriebes erreicht wird. Als Zugmittel 30, 31 können beispielsweise eine Kette oder ein Zahnriemen vorgesehen sein, wobei ein erstes Zugmittel 30 die Achse 11 der Lenkdeichsel 10 mit dem Antriebsrad 6 und ein zweites Zugmittel 31 die Achse 11 der Lenkdeichsel 10 mit dem Antriebsrad 7 verbindet In einer anderen, ebenfalls möglichen Ausführungsform stellt die Achse 11 die Abtriebswelle eines gemeinsamen Lenkmotors dar, der über eine elektrische Steuerung mit einer Lenkdeichsel, einem Lenkrad oder einem Joystick als Lenkgeber verbunden ist.
An der Achse 11 sind die Zugmittel 30, 31 auf zwei kreisförmigen Scheiben 32 geführt. Auf den Lenkachsen 8, 9 der Antriebsräder sind hingegen Kurvenscheiben 33, 34 angeordnet. Die Form der Kurvenscheiben 33, 34 stellt sicher, daß jeweils das kurveninnere Antriebsrad 6, 7 einen stärkeren Lenkeinschlag erhält, als das kurvenäußere Antriebsrad 7, 6.
Figur 4 zeigt die Winkelstellung der Räder des Flurförderzeugs bei betätigter Lenkung. Zu erkennen sind die beiden lenkbaren Antriebsräder 6, 7 sowie zwei an den Gabeln 12 befestigte nicht lenkbare Lastrolleneinheiten 40. Die Antriebsräder 6, 7 sind in einer Lenkstellung für eine Linkskurve des Flurförderzeugs dargestellt. Die Lenkwinkel $\alpha_1$ und $\alpha_2$ der Antriebsräder 6, 7 sind dabei derart eingestellt, daß sich ihre Mittelachsen 41, 42 auf der Mittelachse 43 der Lastrolleneinheiten 40 schneiden. Der Schnittpunkt der Mittelachsen 41, 42, 43 stellt den momentanen Drehpunkt 44 des Flurförderzeugs dar. Die Lenkwinkel $\alpha_1$, $\alpha_2$ der Antriebsräder 6, 7 können hierbei mittels eines Kurvengetriebes gemäß Figur 3 oder über eine zentrale elektrische Steuerung gemäß Figur 2 aufeinander abgestimmt werden. Es ist möglich, bei einer Anordnung mit zwei getrennten Lenkmotoren jeden Lenkmotor mit einer eigenen Steuerung zu versehen, wobei vorzugsweise zwischen den beiden Steuerungen ein Datenaustausch stattfindet.
Bei einer Betätigung der Lenkdeichsel (Fig. 1, Pos. 10) um den Winkelbetrag $\alpha$ für eine Linkskurve wird das linke Antriebsrad 7 um den Winkelbetrag $\alpha_1 = k*\alpha$ gelenkt. Die fahrzeugspezifische Konstante k hat hierbei einen Wert kleiner als 1.
Der Lenkwinkel $\alpha_2$ des rechten Antriebsrads 6 berechnet sich dann nach folgender Formel:

$$\alpha_2 = \arctan (y/(b + y / \tan \alpha_1)) \quad \text{für } \alpha \neq 0;$$

$\alpha_1=\alpha_2=0$ für $\alpha=0$.

Die Konstante y ist der Radstand des Flurförderzeugs, also der Abstand zwischen den Antriebsrädern 6, 7 und den Lastrollen 40. Die Konstante b ist der seitliche Abstand der beiden Antriebsräder 6, 7. Bei einer Rechtskurve ist analog der Winkelbetrag $\alpha_2 = k*\alpha$, der Winkel $\alpha_1$ wird entsprechend berechnet

Figur 5 zeigt die Stellung der Antriebsräder 6, 7 bei maximalem Lenkwinkel. Die maximalen Lenkwinkel der Antriebsräder 6, 7 sind dabei definiert als:

$$\alpha_{1max} = \arctan (b / 2y) + 90°\ ;$$

$\alpha_{2max}=180°-\alpha_{1max}.$

Hierbei ergibt sich ein momentaner Drehpunkt 45 des Flurförderzeugs in der Mitte zwischen den beiden Lastrolleneinheiten 40.

## Patentansprüche

1. Flurförderzeug, beispielsweise Hubwagen oder Kommissionierer, mit zwei lenkbaren Antriebsrädern (6, 7), mindestens zwei von den Antriebsrädem (6,7) in Fahrtrichtung beabstandeten, nicht schwenkbaren Lastrollen (40) und einem von einer Bedienperson betätigbaren Lenkgeber, wobei jedem Antriebsrad (6, 7) ein Antriebsmotor (22, 23) zugeordnet ist, die lenkbaren Antriebsräder (6, 7) in einer zur Fahrzeuglängsachse annähemd orthogonalen Richtung zueinander beabstandet, insbesondere auf verschiedenen Seiten der Fahrzeuglängsachse angeordnet sind, **dadurch gekennzeichnet, daß** die lenkbaren Antriebsräder (6, 7) derart mit dem Lenkgeber in Wirkverbindung stehen, daß in Abhängigkeit von einer Betätigung des Lenkgebers das kurveninnere Antriebsrad (6, 7) einen stärkeren Lenkeinschlag aufweist als das kurvenäußere Antriebsrad (6, 7) und das kurveninnere Antriebsrad (6, 7) mit einer geringeren Geschwindigkeit angetrieben wird als das kurvenäußere Antriebsrad (6, 7).

2. Flurförderzeug nach Anspruch 1, **dadurch gekennzeichnet, daß** der Lenkgeber mit den Antriebsrädern (6, 7) mittels eines Zugmittelgetriebes in Wirkverbindung steht.

3. Flurförderzeug nach Anspruch 2, **dadurch gekennzeichnet, daß** das Zugmittelgetriebe mindestens eine das Zugmittel umlenkende Kurvenscheibe (33, 34) aufweist.

4. Flurförderzeug nach einem der Ansprüche 1 bis 3, **dadurch gekennzeichnet, daß** mindestens ein elektrischer Lenkmotor vorgesehen ist, und der Lenkmotor mit dem Lenkgeber über eine elektronische Steuerung in Wirkverbindung steht, wobei die Steuerung (26) den Lenkmotor in Abhängigkeit von der Stellung des Lenkgebers (27) ansteuert.

5. Flurförderzeug nach Anspruch 4, **dadurch gekennzeichnet, daß** jedes Antriebsrad (6, 7) einen elektrischen Lenkmotor (24, 25) aufweist.

## Claims

1. Industrial truck, for example a reach truck or an order picker, having two steerable driving wheels (6, 7), at least two load rollers (40), which cannot pivot and are spaced apart from the driving wheels (6, 7) in the direction of travel and a steering transmitter which can be actuated by an operator, each driving wheel (6, 7) having an associated drive motor (22, 23), and the steerable driving wheels (6, 7) being arranged such that they are spaced apart from one another in a direction which is approximately orthogonal with respect to the longitudinal axis of the vehicle, in particular on different sides of the longitudinal axis of the vehicle, **characterized in that** the steerable driving wheels (6, 7) are operatively connected to the steering transmitter such that, depending on an actuation of the steering transmitter, the driving wheel (6, 7) on the inside of the curve has a more severe steering deflection than the driving wheel (6, 7) on the outside of the curve, and the driving wheel (6, 7) on the inside of the curve is driven at a lower speed than the driving wheel (6, 7) on the outside of the curve.

2. Industrial truck according to Claim 1,
**characterized in that** the steering transmitter is operatively connected to the driving wheels (6, 7) by means of a traction mechanism.

3. Industrial truck according to Claim 2,
   **characterized in that** the traction mechanism has at least one cam disc (33, 34) which deflects the traction means.

4. Industrial truck according to one of Claims 1 to 3, **characterized in that** at least one electric steering motor is provided, and the steering motor is operatively connected to the steering transmitter via an electronic controller, the controller (26) driving the steering motor depending on the position of the steering transmitter (27).

5. Industrial truck according to Claim 4,
   **characterized in that** each driving wheel (6, 7) has an electric steering motor (24, 25).

## Revendications

1. Chariot de manutention, par exemple chariot élévateur ou chariot de préparation des commandes, comprenant deux roues d'entraînement directrices (6, 7), au moins deux roues de support (40) non pivotante espacées des roues d'entraînement (6, 7) dans la direction de conduite, et un mécanisme de direction pouvant être actionné par un opérateur, un moteur d'entraînement (22, 23) étant associé à chaque roue d'entraînement (6, 7), les roues d'entraînement directrices (6, 7) étant espacées les unes des autres dans une direction approximativement perpendiculaire à l'axe longitudinal du véhicule, notamment étant disposées sur des côtés opposés de l'axe longitudinal du véhicule, **caractérisé en ce que** les roues d'entraînement directrices (6, 7) sont en liaison coopérante avec le mécanisme de direction de telle sorte qu'en fonction d'un actionnement du mécanisme de direction, la roue d'entraînement interne au virage (6, 7) présente un plus fort braquage que la roue d'entraînement externe au virage (6, 7) et que la roue d'entraînement interne au virage (6, 7) soit entraînée avec une plus faible vitesse que la roue d'entraînement externe au virage (6, 7).

2. Chariot de manutention selon la revendication 1,
   **caractérisé en ce que** le mécanisme de direction est en liaison coopérante avec les roues d'entraînement (6, 7) au moyen d'une transmission à courroie.

3. Chariot de manutention selon la revendication 2,
   **caractérisé en ce que** la transmission à courroie présente au moins une came (33, 34) déviant la courroie.

4. Chariot de manutention selon l'une quelconque des revendications 1 à 3, **caractérisé en ce que** l'on prévoit au moins un moteur de direction électrique, et le moteur de direction est en liaison coopérante avec le mécanisme de direction par le biais d'une commande électronique, la commande (26) commandant le moteur de direction en fonction de la position du mécanisme de direction (27).

5. Chariot de manutention selon la revendication 4, **caractérisé en ce que** chaque roue d'entraînement (6, 7) présente un moteur de direction électrique (24, 25).

Fig. 1

Fig. 2

Fig. 3

Fig. 4

Fig. 5